# FASCICULE DE BREVET EUROPEEN

(11) **EP 2 960 774 B1**
(45) Date de publication et mention de la délivrance du brevet: **31.07.2019**
(21) Numéro de dépôt: 15173170.0
(22) Date de dépôt: 22.06.2015
(51) Int. Cl.: G06F 3/0488

(54) **PROCÉDÉ DE MASQUAGE D'UN ÉLÉMENT PARMI UNE PLURALITÉ D'ÉLÉMENTS**
VERFAHREN ZUM MASKIEREN EINES ELEMENTS UNTER EINER VIELZAHL VON ELEMENTEN
METHOD OF MASKING ONE OF A PLURALITY OF ELEMENTS

(30) Priorité: 23.06.2014 FR 1455806
(43) Date de publication de la demande: 30.12.2015
(73) Titulaire: Orange, 75015 Paris (FR)
(72) Inventeur: FLOURY, Cédric, 22700 Perros Guirec (FR); MERCIER, Violaine, 22560 Pleumeur Bodou (FR)

(56) Documents cités:
- EP-A1- 2 930 882
- US-A1- 2009 124 379
- US-A1- 2010 033 422
- US-A1- 2012 108 336
- US-A1- 2012 218 206
- US-A1- 2013 346 921

## Description

### DOMAINE TECHNIQUE

L'invention se rapporte au domaine des interfaces utilisateurs et concerne plus particulièrement un procédé de masquage d'une information parmi un ensemble d'informations restant visibles.

### ART ANTERIEUR

Les documents suivant font partie de l'art antérieur US 2009/124379 A1, US 2012/218206 A1, US 2012/108336 A1, US 2013/346921 A1, et US 2010/033422 A1. L'essor des technologies de communication actuelles s'accompagne chaque jour de nouveaux usages. Les terminaux mobiles connectés en particulier, se sont démocratisés et occupent aujourd'hui une place centrale dans la vie de leurs utilisateurs, les guidant rapidement vers de nouveaux usages.

Leurs utilisateurs sont maintenant joignables à tout instant selon tout un panel de modalités et partagent toutes sortes d'informations avec d'autres, quand et tant qu'ils le désirent.

L'utilisation du smartphone occupe une grande partie du temps de leurs propriétaires car ses usages sont très variés : internet, communications, agenda, lecture, photo, vidéo, télévision, jeux, ... Ainsi, le smartphone se doit d'offrir une interface particulièrement efficace de façon à ce que les utilisateurs ne perdent pas de temps en manipulations techniques et que l'information utile soit disponible immédiatement.

Pour limiter le nombre de manipulations et afficher le plus grand nombre de données utiles, les terminaux utilisent souvent des interfaces utilisateurs basées sur des listes que l'utilisateur peut parcourir par des gestes sur un écran tactile. On peut prendre pour exemple l'interface classique d'une liste de contacts, triée par ordre alphabétique, dont chacune des entrées mène à une fiche détaillée. On connait ainsi des listes de chansons, de vidéo, d'emails ou de messages. Ces listes peuvent prendre la forme d'une mosaïque pour des images par exemple, ou de bulles de conversation dans le cas d'une communication en messagerie instantanée, la finalité d'une telle disposition étant d'afficher plusieurs éléments simultanément à l'écran de manière à réduire le nombre d'interactions pour y accéder.

On peut noter que, même si une grande partie des communications interpersonnelles transite aujourd'hui par les réseaux numériques mondiaux, et malgré les interfaces pratiques et intuitives dont les smartphones sont dotés, les utilisateurs partagent encore très souvent une information en montrant simplement l'écran de leur smartphone à un interlocuteur présent à leur côté. Par exemple, un utilisateur peut tout à fait sélectionner une photo sur son smartphone, l'afficher à l'écran et la présenter à un interlocuteur présent à ses côtés. De la même manière, un utilisateur peut communiquer un numéro de téléphone à une autre personne en présentant simplement la fiche d'un contact stockée sur son terminal.

Ce mode de communication est de toute évidence très adapté à certaines communications, mais il présente un inconvénient qui peut rendre délicat sa mise en oeuvre. Il arrive en effet, par le biais d'interfaces basées sur des listes, que l'information qu'un utilisateur souhaite partager soit affichée simultanément avec d'autres informations également affichées à l'écran qu'il souhaite garder confidentielles.

Dans cette situation, il suffit parfois de sélectionner une vue détaillée de l'élément que l'on souhaite partager afin que les autres éléments de la liste ne soient plus visibles. Par exemple, un utilisateur peut afficher une photo en plein écran avant de la montrer. Toutefois, cette technique n'est pas adaptée lorsqu'il s'agit de masquer un seul élément dans une liste que l'on souhaite partager. Une pratique courante lorsqu'il s'agit de masquer certains messages dans une conversation à partager consiste à ajuster le défilement de la liste de façon à ce que les messages à masquer n'apparaissent pas sur l'écran. Malgré tout, cela peut s'avérer inefficace dans beaucoup de situations car plusieurs messages restent visibles simultanément. Il est également possible de dicter le message, de cacher une partie de l'écran avec la main, d'effectuer des copier/coller vers d'autres applications, mais les circonstances ne le permettent pas toujours et les manipulations nécessaires peuvent être décourageantes.

Certaines interfaces de messagerie ou de photo offrent la possibilité de sécuriser l'accès à certains contenus, par un système de mot de passe par exemple. Un utilisateur peut alors faire en sorte qu'une conversation n'apparaisse pas parmi les autres conversations. En revanche, cette méthode implique des manipulations additionnelles souvent décourageantes qui interdisent toute spontanéité dans un échange.

On peut noter que ces manipulations basées sur les techniques existantes précitées augmentent le temps passé par les utilisateurs sur leurs terminaux, diminuant d'autant leur autonomie.

Il existe donc bien un besoin pour une solution permettant de masquer certains éléments parmi d'autres éléments affichés sur un écran qui soit intuitive et qui nécessite un minimum d'interaction.

### RESUME DE L'INVENTION

À cet effet, l'invention concerne un procédé de masquage tel que décrit dans la revendication 1 et un dispositif de masquage tel que décrit dans la revendication 7. Le revendications 9 et 10 décrivent un programme d'ordinateur et un support d'enregistrement correspondants.

Le revendications dépendantes décrivent des réalisations particulières de l'invention.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les figures 1a, 1b, 1c et 1d représentent différent affichages sur un terminal portable adapté pour la mise en oeuvre du procédé de masquage, selon un exemple illustratif ne faisant pas partie de l'invention;
- La figure 2a représente un exemple illustratif, ne faisant pas partie de l'invention.

La figure 2b illustre l'étape de déplacement des symboles de masquage selon un mode de réalisation de l'invention.
- La figure 3 illustre les principales étapes du procédé de masquage selon un mode particulier de réalisation de l'invention ; et
- La figure 4 illustre l'architecture d'un dispositif adapté pour la mise en oeuvre du procédé de masquage selon une réalisation particulière de l'invention.

### DESCRIPTION D'UN MODE DE RÉALISATION PARTICULIER

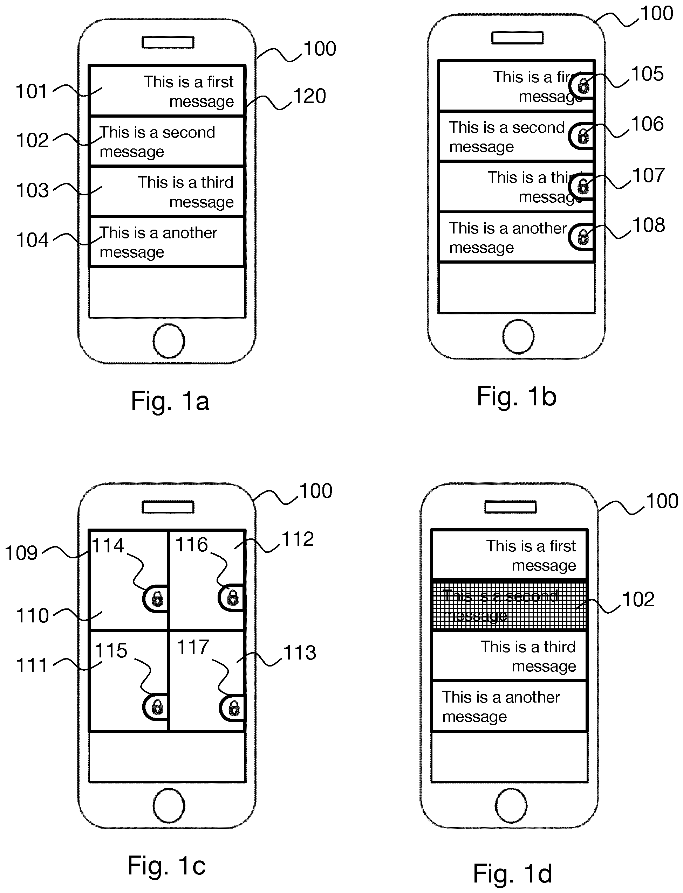

La figure 1a illustre un terminal 100 implémentant le procédé selon la présente invention. Il s'agit par exemple d'un terminal mobile de type smartphone doté d'un écran tactile. Le terminal 100 est adapté pour afficher sur l'écran tactile une liste 120 de messages échangés entre le propriétaire du terminal et un ou plusieurs interlocuteurs. Il peut s'agir par exemple d'une conversation par messagerie instantanée ou SMS (Short Message Service). Le terminal 100 affiche par exemple les 4 derniers messages reçus 101, 102 103 et 104.

Il est opportun de rappeler ici que cet exemple est donné à titre purement illustratif pour aider à la bonne compréhension de l'invention selon un mode particulier de réalisation. C'est exemple n'est bien sûr pas exhaustif, l'invention pouvant s'appliquer à toutes sortes d'informations affichées simultanément sur un écran, comme par exemple une mosaïque d'images, une liste de contacts ou encore des icônes d'application.

La figure 1b représente l'écran du même terminal 100 suite à une action de l'utilisateur. On distingue en particulier des symboles de masquage 105, 106, 107 et 108 associés respectivement aux messages 101, 102, 103 et 104 qui sont affichés par le terminal suite à une action de l'utilisateur. Par exemple, l'utilisateur peut avoir touché un bouton particulier sur le terminal ou sur l'interface graphique d'une application, ou encore effectué un geste particulier sur l'écran tactile du terminal. Un symbole de masquage est affiché sur un message particulier lorsque l'utilisateur effleure l'écran à l'emplacement de ce message ou qu'il le sélectionne d'un autre manière (au moyen d'un pointeur par exemple, lorsque le terminal est un ordinateur personnel).

Le symbole de masquage est un indice visuel représentant un cadenas fermé positionné sur la droite de l'élément. L'indice visuel peut être différent ou ne pas être présent du tout. L'indice visuel peut être semi-transparent ou en arrière-plan par rapport au texte pour ne pas gêner la lecture du message.

La figure 1c illustre un exemple dans lequel une mosaïque 109 d'images est affichée sur l'écran du terminal. Des symboles de masquage 114, 115, 116 et 117 sont affichés en association avec les images correspondantes 109, 111, 112 et 113.

La figure 1d montre le terminal 100 suite au masquage complet de l'élément 102. Le masquage déforme l'aspect visuel de l'information de manière la rendre inintelligible tout en conservant des caractéristiques pouvant permettre au titulaire de la distinguer parmi d'autres. Le masquage consiste à rendre flou l'élément masqué, en appliquant par exemple un flou gaussien sur la zone concernée. Le masquage peut également consister en un effet de pixellisation, ou encore à une modification des caractères selon un algorithme de cryptage. Le masquage peut être opaque et ne permet pas de discerner l'élément masqué.

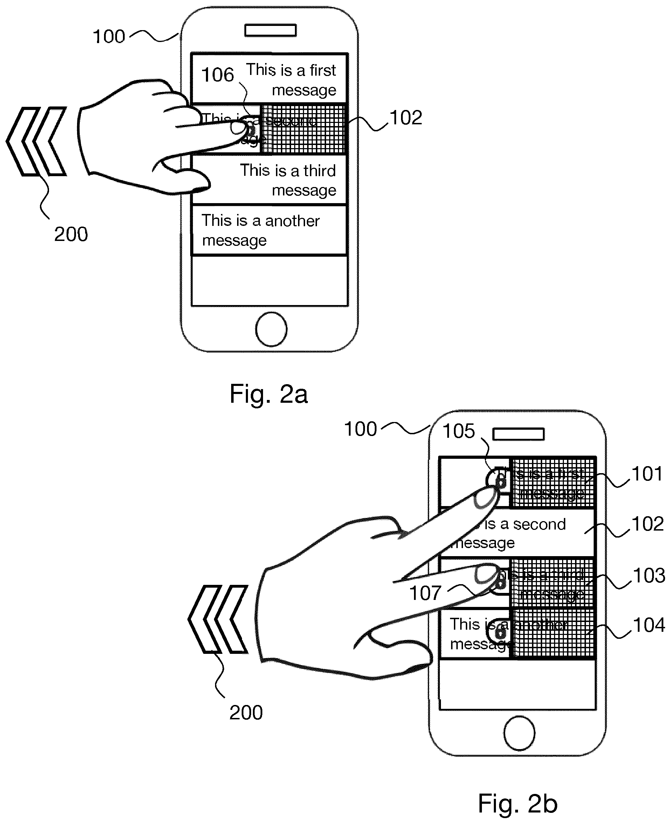

La figure 2a représente le terminal 100 lorsqu'un utilisateur déplace sont doigt sur l'écran tactile suite à un contact à l'emplacement du symbole de masquage 106 associé au message 102. Dans cet exemple, l'utilisateur déplace son doigt sur l'écran selon une direction 200, de façon continue, depuis l'emplacement initial du symbole de masquage 106 tel que représenté sur la figure 1b. Le terminal peut détecter le contact sur le symbole de masquage ainsi que le déplacement du contact grâce à son écran tactile. Le symbole de masquage 106 est déplacé sur le message 102 en corrélation avec le déplacement du doigt détecté sur l'écran. Le déplacement du symbole de masquage est une translation selon une dimension du message. Par exemple, sur la figure 2a, le symbole effectue une translation de droite à gauche selon la largeur du message. La translation peut être effectuée selon la hauteur de l'élément.

Au cours de ce déplacement, la portion du message 102 située entre la position courante du symbole de masquage et sa position initiale est masquée, la zone masquée étant actualisée de façon continue en fonction des déplacements du contact détecté sur l'écran. Ainsi, toujours en référence à la figure 2a, la portion masquée du message grandit lorsque l'utilisateur déplace son doigt dans la direction 200 et rétrécit lorsqu'il déplace son doigt dans la direction opposée.

Lorsque le contact avec l'écran cesse et que le symbole de masquage est à un emplacement prédéfini, le message est intégralement masqué. Par exemple, lorsque le doigt de l'utilisateur de la figure 1a atteint l'extrémité gauche du message 102 et que le contact cesse, le terminal applique un masquage sur la totalité du message. Alternativement, lorsque le doigt de l'utilisateur atteint la moitié de la longueur de l'élément, le terminal applique le masquage sur la totalité du message. L'élément masqué peut ne plus apparaitre à l'écran lorsqu'il est intégralement masqué, permettant ainsi de cacher à un tiers le fait même que le message existe.

Lorsque le contact avec l'écran cesse alors que le symbole de masquage n'est pas affiché à un emplacement prédéterminé, par exemple lorsqu'il n'est pas affiché à l'extrême gauche du message 102 ou qu'il n'a pas dépassé la moitié du message, le symbole de masquage revient automatiquement vers sa position initiale en effectuant une translation selon la direction opposée à la direction 102. Le procédé permet ainsi à l'utilisateur de se raviser avant d'avoir masqué l'élément. Une courbe d'accélération particulière est appliquée au déplacement du symbole de masquage vers sa position initiale, comme par exemple un courbe d'accélération exponentielle.

La figure 2b illustre un mode de réalisation particulier dans lequel l'utilisateur effectue sur le terminal 100 un contact simultané avec deux symboles de masquage 105 et 107 associés respectivement aux messages 101 et 103. Ce geste à ceci de particulier qu'il permet selon l'invention de désigner le message intercalaire 102 comme étant un message à préserver du masquage. L'utilisateur peut de cette façon commander le masquage de tous les messages de la liste 120 excepté celui ainsi désigné. Les contacts sont détectés par le terminal grâce à un écran tactile adapté pour détecter des contacts multiples simultanés. Lorsque, tout en maintenant le contact sur l'écran, l'utilisateur effectue un geste selon la direction 200, les symboles de masquage 105, 107 et 108 associés respectivement aux messages 101, 103 et 104 sont déplacés simultanément selon le principe décrit plus haut et la portion correspondante des messages auxquels ils sont associés est masquée. De cette façon, lorsqu'un utilisateur souhaite montrer un unique message dans une conversation, il peut d'un simple geste obtenir la confidentialité recherchée.

Selon une réalisation particulière, le procédé comporte en outre une étape de rétablissement de l'affichage lorsque le terminal est agité pendant une durée prédéterminée. Dans ce cas, tout ou partie des éléments masqués peuvent être rétablis simultanément. Le terminal peut par exemple utiliser des capteurs de type accéléromètres et/ou gyroscopes associés à une horloge pour détecter des secousses appliquées au terminal pendant une durée prédéterminée. Ce mode de réalisation est avantageux car il permet à l'utilisateur de rétablir rapidement l'affichage après l'avoir utilisé pour présenter une information à un tiers. Un autre avantage est que l'affichage peut difficilement être rétabli discrètement. De ce fait, si le tiers vient à secouer lui-même le terminal afin de consulter des éléments masqués, le propriétaire du terminal peut s'en apercevoir et intervenir s'il est présent.

Selon un mode de réalisation particulier, le rétablissement de l'affichage se fait de manière symétrique au masquage. Par exemple, le procédé de masquage peut comporter en outre, suite à une action de l'utilisateur lorsque des éléments sont masqués, des étapes d'affichage, au second emplacement prédéterminé, d'un symbole de démasquage associé à un élément masqué ; de détection d'un contact avec l'écran sur un élément masqué ; de déplacement continu du symbole de démasquage sur l'élément en corrélation avec un déplacement du contact détecté sur l'écran et de démasquage de la portion de l'élément située entre le symbole de démasquage et le second emplacement prédéterminé ; et de démasquage de la totalité de l'élément lorsque le symbole de démasquage est à au premier emplacement prédéterminé et que le contact n'est plus détecté.

Dans une réalisation particulière de l'invention, les éléments restent masqués pendant une période de temps prédéterminée. Par exemple, l'affichage peut être rétabli automatiquement après 30 secondes ou après n'importe quelle durée configurée au préalable.

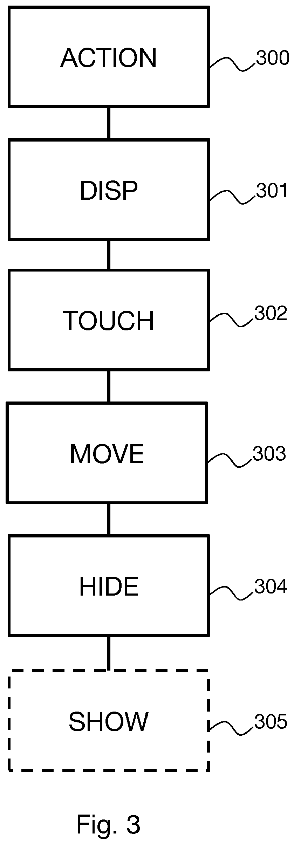

La figure 3 illustre les principales étapes du procédé de masquage.

Une première étape 300 comporte la détection par le terminal d'une action prédéterminée effectuée par un utilisateur. Par exemple, il peut s'agir d'un appui sur un bouton physique du terminal ou sur un bouton représenté sur un écran tactile, ou d'un geste particulier sur l'écran comme par exemple la sélection d'un élément dans une liste.

Lorsque l'action est détectée, le terminal affiche à l'étape 301 au moins un symbole de masquage en association avec au moins un élément affiché sur l'écran, le au moins un symbole étant affiché à un emplacement prédéterminé. Par exemple, sur la figure 1b, les symboles sont affichés pour chaque messages de la liste, sur la droite. Le symbole représenté sur cette figure est un cadenas fermé mais tout autre symbole peut bien entendu être utilisé.

Un contact sur l'écran est détecté à l'étape 302 sur au moins un symbole. Par exemple, l'utilisateur pose un doigt sur l'écran à l'emplacement du symbole 106 représenté sur la figure 1b. Il peut aussi poser différents doigts simultanément sur différents symboles de masquage comme illustré sur la figure 2b.

L'étape 303 concerne un déplacement continu du symbole de masquage sur l'élément en corrélation avec un déplacement du contact détecté sur l'écran et le masquage de la portion de l'élément située entre le symbole de masquage et le premier emplacement prédéterminé. Ainsi, comme décrit plus haut en référence à la figure 2a, le symbole de masquage se déplace en corrélation avec le déplacement du contact. La portion du message située entre la position courante du symbole de masquage et sa position initiale est masquée, la portion masquée étant actualisée en continu en fonction du déplacement du contact.

À l'étape 304, la totalité de l'élément est masqué lorsque le symbole de masquage est à un second emplacement prédéterminé et que le contact n'est plus détecté. Par exemple, lorsque l'utilisateur à déplacé son doigt à l'extrémité gauche du message 102 de la figure 2a et qu'il relève son doigt, le message est masqué entièrement, comme nous l'avons vu plus haut.

Selon un mode de réalisation particulier, le procédé comporte en outre une étape optionnelle 305 de rétablissement de l'affichage lorsque le terminal est agité pendant une durée prédéterminée. Par exemple, lorsque le terminal 100 de la figure 1d est secoué pendant une certaine durée, l'affichage affiche de nouveau un écran tel que représenté sur l'une des figures 1a ou 1b.

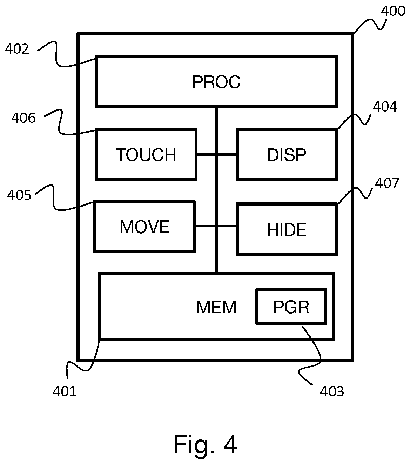

La figure 4 illustre un dispositif 400 mettant en oeuvre le procédé de masquage, selon un mode particulier de réalisation de l'invention. Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en oeuvre le procédé de masquage tel que décrit dans l'invention en référence aux figures 1a, 1b, 1c, 1d, 2a, 2b et 3, et notamment les étapes d'affichage d'un symbole de masquage associé à un élément à un premier emplacement prédéterminé, de détection d'un contact avec l'écran sur un élément non masqué, de déplacement continu du symbole de masquage sur l'élément en corrélation avec un déplacement du contact détecté sur l'écran et de masquage de la portion de l'élément située entre le symbole de masquage et le premier emplacement prédéterminé, et de masquage de la totalité de l'élément lorsque le symbole de masquage est à un second emplacement prédéterminé et que le contact n'est plus détecté.

À l'initialisation, les instructions du programme d'ordinateur 403 sont par exemple chargées dans une mémoire RAM (Random Access Memory) avant d'être exécutées par le processeur de l'unité de traitement 402. Le processeur de l'unité de traitement 402 met en oeuvre les étapes du procédé de masquage selon les instructions du programme d'ordinateur 403.

Pour cela, le dispositif comprend, outre la mémoire 401, une unité d'affichage 404, comme par exemple un écran tactile DISP adapté pour afficher un symbole de masquage associé à un élément à un premier emplacement prédéterminé. Le dispositif comprend en outre un module 405 de déplacement d'objets graphiques en corrélation avec des emplacements détectés sur l'écran, adapté pour mettre en oeuvre l'étape de déplacement continu du symbole de masquage sur l'élément en corrélation avec un déplacement du contact détecté sur l'écran. Il peut s'agir par exemple d'un circuit permettant de coupler les données de contact recueillies depuis un écran tactile avec la position d'un objet graphique sur l'écran. Le dispositif comporte également un module 406 de détection d'une action utilisateur et de détection d'un contact avec l'écran sur un élément non masqué. Par exemple, il peut s'agir d'un bouton adapté pour saisir une action ou d'un écran tactile. Le dispositif comprend aussi un module (407) de masquage de la portion de l'élément située entre le symbole de masquage et le premier emplacement prédéterminé, et de masquage de la totalité de l'élément lorsque le symbole de masquage est à un second emplacement prédéterminé et que le contact n'est plus détecté.

Selon un mode particulier de réalisation, le dispositif peut être intégré dans un terminal mobile de type smartphone, une tablette tactile, appareil photo un ordinateur personnel ou encore un ordinateur de bord de véhicule.

## Revendications

1. Procédé de masquage de messages dans une liste de messages affichés sur un terminal à écran tactile **caractérisé en ce qu'**il comporte, suite à une action (300) d'un utilisateur, les étapes suivantes :
- Affichage (301) d'un premier symbole de masquage associé à un premier message à un premier emplacement, et d'un deuxième symbole de masquage associé à un deuxième message à un deuxième emplacement, le premier message et le second message étant situés de part et d'autre d'un troisième message,
- Détection (302) simultanée d'un premier contact avec l'écran sur le symbole de masquage associé au premier message et d'un deuxième contact avec l'écran sur le symbole de masquage associé au deuxième message,
- Déplacement continu (303) du symbole de masquage associé à chaque message de la liste excepté le troisième message en corrélation avec le déplacement des contacts détectés sur l'écran et masquage, pour tous les messages affichés excepté le troisième message, de la portion située entre la position initiale du symbole de masquage associée à chaque message et sa position courante, et
- Masquage (304), pour chaque message de la liste excepté le troisième message, de la totalité du message lorsque le symbole de masquage est à un second emplacement et que le contact n'est plus détecté.

2. Procédé de masquage selon la revendication 1 **caractérisé en ce que** le masquage consiste à flouter les messages de manière à les rendre illisibles.

3. Procédé de masquage selon l'une des revendications 1 ou 2 **caractérisé en ce que** le déplacement du symbole de masquage est une translation selon une dimension du message à masquer.

4. Procédé de masquage selon l'une des revendications 1 à 3 **caractérisé en ce que** le symbole de masquage est un cadenas fermé.

5. Procédé de masquage selon l'une des revendications 1 à 4 **caractérisé en ce qu'**il comporte en outre une étape de rétablissement de l'affichage lorsque le terminal est agité pendant une durée prédéterminée.

6. Procédé de masquage selon l'une des revendications 1 à 5 **caractérisé en ce qu'**il comporte en outre une étape de rétablissement de l'affichage par un déplacement continu d'un symbole de démasquage en corrélation avec un déplacement d'un contact détecté sur l'écran depuis le second emplacement vers le premier emplacement,

7. Dispositif de masquage de messages dans une liste de messages affichés sur un terminal à écran tactile **caractérisé en ce qu'**il comprend des modules de:
- Détection (406) d'une action utilisateur,
- Affichage (404) d'un premier symbole de masquage associé à un premier message à un premier emplacement, et d'un deuxième symbole de masquage associé à un deuxième message à un deuxième emplacement, le premier message et le second message étant situés de part et d'autre d'un troisième message,
- Détection (406) simultanée d'un premier contact avec l'écran sur le symbole de masquage associé au premier message et d'un deuxième contact avec l'écran sur le symbole de masquage associé au deuxième message,
- Déplacement (405) continu du symbole de masquage associé à chaque message de la liste excepté le troisième message en corrélation avec le déplacement des contacts détectés sur l'écran,
- Masquage (407), pour tous les messages affichés excepté le troisième message de la portion située entre la position initiale du symbole de masquage associée à chaque message et sa position courante, et
- Masquage (407), pour chaque message de la liste excepté le troisième message, de la totalité du message lorsque le symbole de masquage est à un second emplacement et que le contact n'est plus détecté.

8. Terminal **caractérisé en ce qu'**il comprend un dispositif selon la revendication 7.

9. Programme d'ordinateur comportant des instructions pour l'exécution du procédé de masquage selon l'une quelconque des revendications 1 à 6, lorsque le programme est exécuté par un processeur.

10. Support d'enregistrement lisible par un ordinateur sur lequel est enregistré un programme d'ordinateur comprenant des instructions pour l'exécution des étapes du procédé de masquage selon l'une des revendications 1 à 6.

## Patentansprüche

1. Verfahren zum Maskieren von Nachrichten in einer Liste von Nachrichten, die auf einem Endgerät mit Berührungsbildschirm angezeigt werden, **dadurch gekennzeichnet, dass** es im Anschluss an eine Aktion (300) eines Benutzers die folgenden Schritte umfasst:
- Anzeigen (301) eines ersten Maskierungssymbols, das einer ersten Nachricht zugeordnet ist, an einem ersten Ort und eines zweiten Maskierungssymbols, das einer zweiten Nachricht zugeordnet ist, an einem zweiten Ort, wobei sich die erste Nachricht und die zweite Nachricht beiderseits einer dritten Nachricht befinden,
- gleichzeitiges Erkennen (302) eines ersten Kontakts mit dem Bildschirm auf dem Maskierungssymbol, das der ersten Nachricht zugeordnet ist, und eines zweiten Kontakts mit dem Bildschirm auf dem Maskierungssymbol, das der zweiten Nachricht zugeordnet ist,
- kontinuierliches Verschieben (303) jedes Maskierungssymbols, das einer Nachricht der Liste mit Ausnahme der dritten Nachricht zugeordnet ist, in Verbindung mit der Verschiebung der auf dem Bildschirm erkannten Kontakte, und Maskieren, für alle angezeigten Nachrichten mit Ausnahme der dritten Nachricht, des Abschnitts, der sich zwischen der ursprünglichen Position des Maskierungssymbols, das der jeweiligen Nachricht zugeordnet ist, und seiner aktuellen Position befindet, und
- Maskieren (304), für jede Nachricht der Liste mit Ausnahme der dritten Nachricht, der gesamten Nachricht, wenn sich das Maskierungssymbol an einem zweiten Ort befindet und der Kontakt nicht mehr erkannt wird.

2. Verfahren zum Maskieren nach Anspruch 1, **dadurch gekennzeichnet, dass** das Maskieren darin besteht, die Nachrichten verschwommen zu machen, so dass sie unleserlich werden.

3. Verfahren zum Maskieren nach Anspruch 1 oder 2, **dadurch gekennzeichnet, dass** das Verschieben des Maskierungssymbols eine Translation entsprechend einer Abmessung der zu maskierenden Nachricht ist.

4. Verfahren zum Maskieren nach einem der Ansprüche 1 bis 3, **dadurch gekennzeichnet, dass** das Maskierungssymbol ein geschlossenes Vorhängeschloss ist.

5. Verfahren zum Maskieren nach einem der Ansprüche 1 bis 4, **dadurch gekennzeichnet, dass** es außerdem einen Schritt der Wiederherstellung der Anzeige, wenn das Endgerät während einer vorbestimmten Dauer bewegt wird, umfasst.

6. Verfahren zum Maskieren nach einem der Ansprüche 1 bis 5, **dadurch gekennzeichnet, dass** es außerdem einen Schritt der Wiederherstellung der Anzeige durch ein kontinuierliches Verschieben eines Demaskierungssymbols in Verbindung mit einer Verschiebung eines erkannten Kontakts auf dem Bildschirm vom zweiten Ort zum ersten Ort umfasst.

7. Vorrichtung zum Maskieren von Nachrichten in einer Liste von Nachrichten, die auf einem Endgerät mit Berührungsbildschirm angezeigt werden, **dadurch gekennzeichnet, dass** sie Module umfasst zum:
- Erkennen (406) einer Benutzeraktion,
- Anzeigen (404) eines ersten Maskierungssymbols, das einer ersten Nachricht zugeordnet ist, an einem ersten Ort und eines zweiten Maskierungssymbols, das einer zweiten Nachricht zugeordnet ist, an einem zweiten Ort, wobei sich die erste Nachricht und die zweite Nachricht beiderseits einer dritten Nachricht befinden,
- gleichzeitigen Erkennen (406) eines ersten Kontakts mit dem Bildschirm auf dem Maskierungssymbol, das der ersten Nachricht zugeordnet ist, und eines zweiten Kontakts mit dem Bildschirm auf dem Maskierungssymbol, das der zweiten Nachricht zugeordnet ist,
- kontinuierlichen Verschieben (405) jedes Maskierungssymbols, das einer Nachricht der Liste mit Ausnahme der dritten Nachricht zugeordnet ist, in Verbindung mit der Verschiebung der auf dem Bildschirm erkannten Kontakte,
- Maskieren (407), für alle angezeigten Nachrichten mit Ausnahme der dritten Nachricht, des Abschnitts, der sich zwischen der ursprünglichen Position des Maskierungssymbols, das der jeweiligen Nachricht zugeordnet ist, und seiner aktuellen Position befindet, und
- Maskieren (407), für jede Nachricht der Liste mit Ausnahme der dritten Nachricht, der gesamten Nachricht, wenn sich das Maskierungssymbol an einem zweiten Ort befindet und der Kontakt nicht mehr erkannt wird.

8. Endgerät, **dadurch gekennzeichnet, dass** es eine Vorrichtung nach Anspruch 7 umfasst.

9. Computerprogramm, welches Anweisungen zur Ausführung des Verfahrens zum Maskieren nach einem der Ansprüche 1 bis 6, wenn das Programm von einem Prozessor ausgeführt wird, umfasst.

10. Computerlesbares Aufzeichnungsmedium, auf welchem ein Computerprogramm aufgezeichnet ist, das Anweisungen zur Ausführung der Schritte des Verfahrens zum Maskieren nach einem der Ansprüche 1 bis 6 umfasst.

## Claims

1. Method for masking messages in a list of messages displayed on a touch screen terminal, **characterized in that** it comprises, after an action (300) by a user, the following steps:
- Displaying (301) a first masking symbol associated with a first message at a first location, and a second masking symbol associated with a second message at a second location, the first message and the second message being located on either side of a third message,
- Simultaneously detecting (302) a first contact with the screen on the masking symbol associated with the first message and a second contact with the screen on the masking symbol associated with the second message,
- Continuously moving (303) the masking symbol associated with each message on the list except the third message, in correlation with the movement of the contacts detected on the screen, and masking, for all the displayed messages except the third message, the portion located between the initial position of the masking symbol associated with each message and its current position, and
- Masking (304), for each message on the list except the third message, the whole of the message when the masking symbol is at a second location and contact is no longer detected.

2. Masking method according to Claim 1, **characterized in that** the masking consists of blurring the messages so as to make them illegible.

3. Masking method according to either of Claims 1 and 2, **characterized in that** the movement of the masking symbol is a translation along one dimension of the message to be masked.

4. Masking method according to any of Claims 1 to 3, **characterized in that** the masking symbol is a closed padlock.

5. Masking method according to any of Claims 1 to 4, **characterized in that** it further comprises a step of restoring the display when the terminal is shaken for a predetermined period.

6. Masking method according to any of Claims 1 to 5, **characterized in that** it further comprises a step of restoring the display by a continuous movement of an unmasking symbol in correlation with a movement of a contact detected on the screen from the second location towards the first location.

7. Device for masking messages in a list of messages displayed on a touch screen terminal, **characterized in that** it comprises modules for:
- Detecting (406) a user action,
- Displaying (404) a first masking symbol associated with a first message at a first location, and a second masking symbol associated with a second message at a second location, the first message and the second message being located on either side of a third message,
- Simultaneously detecting (406) a first contact with the screen on the masking symbol associated with the first message and a second contact with the screen on the masking symbol associated with the second message,
- Continuously moving (405) the masking symbol associated with each message on the list except the third message, in correlation with the movement of the contacts detected on the screen,
- Masking (407), for all the displayed messages except the third message, the portion located between the initial position of the masking symbol associated with each message and its current position, and
- Masking (407), for each message on the list except the third message, the whole of the message when the masking symbol is at a second location and contact is no longer detected.

8. Terminal **characterized in that** it comprises a device according to Claim 7.

9. Computer program including instructions for executing the masking method according to any of Claims 1 to 6, when the program is executed by a processor.

10. Computer-readable recording medium on which is recorded a computer program comprising program code instructions for executing the steps of the masking method as claimed in any of Claims 1 to 6.
